# EUROPÄISCHE PATENTSCHRIFT

(11) **EP 4 655 949 B1**
(45) Veröffentlichungstag und Bekanntmachung des Hinweises auf die Patenterteilung: **11.11.2026**
(21) Anmeldenummer: 23813654.3
(22) Anmeldetag: 24.11.2023
(51) Int. Cl.: H04R 1/02, B60Q 3/62

(54) **LAUTSPRECHERBAUGRUPPE MIT BELEUCHTUNGSEFFEKT UND FAHRZEUG**
LOUDSPEAKER ASSEMBLY WITH ILLUMINATION EFFECT AND VEHICLE
ENSEMBLE HAUT-PARLEUR À EFFET D'ÉCLAIRAGE ET VÉHICULE

(30) Priorität: 27.01.2023 DE 102023000243
(43) Veröffentlichungstag der Anmeldung: 03.12.2025
(73) Patentinhaber: Mercedes-Benz Group AG, 70372 Stuttgart (DE)
(72) Erfinder: RÖHM, Klaus, 71409 Schwaikheim (DE)
(74) Vertreter: Novagraaf Group
(86) Internationale Anmeldenummer: PCT/EP2023/083042
(87) Internationale Veröffentlichungsnummer: WO 2024/156398

(56) Entgegenhaltungen:
- WO-A1-2018/167862
- DE-A1- 102020 003 325
- US-A1- 2018 035 187

## Beschreibung

Die Erfindung betrifft eine Lautsprecherbaugruppe mit Beleuchtungseffekt nach der im Oberbegriff von Anspruch 1 näher definierten Art sowie ein Fahrzeug mit einer solchen Lautsprecherbaugruppe.

Zur Erzeugung eines "Hinguckeffekts" sind Lautsprecher mit integrierter Beleuchtung bekannt. Solche Lautsprecher können in einem Fahrzeug verbaut sein, wodurch sich ein besonders wertanmutendes Erscheinungsbild für die Fahrzeuginsassen des Fahrzeugs realisieren lässt.

Typischerweise können Lautsprecher in der A-Säule des Fahrzeugs und der Fahrer- und Beifahrertür integriert sein. Die Lautsprecher sind zum Schutz mit einer Blende, beispielsweise einer Lochblende, versehen. In einer Draufsicht auf diese Blende können in bekannten Ausführungsformen Leuchtmittel hinter dem Lautsprecher angeordnet sein, um diesen zu hinterleuchten. Das so abgestrahlte Licht wird auf der dem Lautsprecher zugewandten Seite der Blende in Richtung des Lautsprechers reflektiert. Der Lautsprecher kann somit für einen Betrachter sichtbar sein, was unerwünscht sein kann. Nachteilig ist ferner, dass der Lautsprecher dem Licht "im Weg ist", wodurch sich keine flächig durchgängigen Lichtmuster erzeugen lassen. Um eine gleichmäßige Beleuchtung zu gewährleisten muss bei einer solchen Variante der Lautsprecher mittig hinter der Blende angeordnet werden, was eine Gestaltungsfreiheit bei der Auslegung einschränkt. Dies kann zu Problemen führen, wenn es für eine einwandfreie Akustik erforderlich ist den Lautsprecher außermittig zu platzieren.

Eine beleuchtbare Lautsprecherabdeckung ist auch aus der DE 10 2020 003 325 A1 bekannt. Zwischen Lautsprecher und Abdeckblende ist eine als Lichtleiter fungierende Stützstruktur angeordnet. An einem äußeren Rand der Stützstruktur wird mittels Beleuchtungsmitteln Licht in den Lichtleiter eingekoppelt, welches seitlich wieder austritt. Hierdurch wird eine diffuse Beleuchtung des Lautsprechers ermöglicht, wobei das aus dem Lichtleiter austretende Licht in Richtung eines Betrachters aus den Schalllöchern der Abdeckblende austritt. Somit wird die Abdeckblende des Lautsprechers hinterleuchtet. Die Abdeckblende und die Stützstruktur weisen eine zueinander abweichende Geometrie auf. So ist die Abdeckblende als Wabengitter ausgeführt und die Stützstruktur als Balkenstruktur konzentrischer miteinander über radiale Streben verbundener Kreise. Die Abdeckblende dient insbesondere dem Berührschutz und die Stützstruktur zur Aufnahme mechanischer Lasten und zum Weiterleiten des Lichts. Bei eingeschalteter Beleuchtung hebt sich die Stützstruktur von der Abdeckblende ab, was das visuelle Erscheinungsbild der Lautsprecherabdeckung verschlechtert.

Ferner offenbart die US 2018 / 0 035 187 A1 eine Licht- und Lautsprechertreibervorrichtung. Die Vorrichtung umfasst gemäß einer Ausführungsform einen Lautsprecher mit einem Lautsprechergitter. An den jeweiligen Unterseiten der Lamellen des Lautsprechergitters sind LEDs angeordnet, die die Oberseite der jeweiligen Nachbarlamelle beleuchten.

Ferner offenbart die DE 20 2006 015 232 U1 eine Abdeckeinrichtung für einen Lautsprecher. Die Abdeckeinrichtung umfasst einen als Lichtleiter ausgeführten Rahmen. Am Rahmen lässt sich ein Lautsprechergrill befestigen und somit hinterleuchten.

Ferner offenbart die DE 10 2022 100 064 A1 ein Interieurbauteil für Fahrzeuge. Das Interieurbauteil umfasst eine Lautsprecherabdeckung mit einem zumindest abschnittsweise als Lichtleiter ausgeführten Träger.

Zudem ist aus der DE 10 2020 003 925 A1 ein beleuchtetes Lautsprechergitter bekannt. Dabei wird Licht durch eine seitlich am Lautsprechergitter angeordnete Lichtquelle in eine Gitterstruktur des Lautsprechergitters eingekoppelt.

Ferner offenbart die WO 2018/167862 A1 eine Lautsprecherbaugruppe mit Beleuchtungseffekt mit den im Oberbegriff von Anspruch 1 angegebenen Merkmalen.

Der vorliegenden Erfindung liegt die Aufgabe zugrunde eine verbesserte Lautsprecherbaugruppe mit Beleuchtungseffekt anzugeben, welche die im vorigen beschriebenen Nachteile vermeidet.

Erfindungsgemäß wird diese Aufgabe durch eine Lautsprecherbaugruppe mit den Merkmalen des Anspruchs 1 gelöst. Vorteilhafte Ausgestaltungen und Weiterbildungen sowie ein Fahrzeug mit einer solchen Lautsprecherbaugruppe ergeben sich aus den hiervon abhängigen Ansprüchen.

Eine gattungsgemäße Lautsprecherbaugruppe mit Beleuchtungseffekt, umfassend zumindest einen Lautsprecher, eine den zumindest einen Lautsprecher in Richtung einer Schallabstrahlungsrichtung abdeckende Blende und eine Beleuchtungseinrichtung zum Bescheinen der Blende mit Licht wird erfindungsgemäß dadurch weitergebildet, dass
- die Blende von einem Lamellengitter ausgebildet ist, umfassend wenigstens zwei im Wesentlichen in eine erste Richtung verlaufende Lamellen;
- zumindest einige der Lamellen jeweils von einer Lichtleitstruktur und einer damit integral ausgeführten Reflektionsstruktur ausgebildet sind, wobei die Reflektionsstruktur an einer Lamellenunterseite eine in die erste Richtung verlaufende Aussparung aufweist, in die die Lichtleitstruktur derart eingelassen ist, dass aus der Lichtleitstruktur auskoppelbares Licht auf eine Lamellenoberseite der darunterliegenden Nachbarlamelle werfbar ist; und
- die jeweiligen Lichtleitstrukturen zusammen mit einem Einkoppelsteg und wenigstens einer Lichtquelle die Beleuchtungseinrichtung ausbilden, wobei mittels der wenigstens einen Lichtquelle Licht in den Einkoppelsteg einkoppelbar ist, der Einkoppelsteg in eine zur ersten Richtung orthogonale zweite Richtung verläuft und die Lichtleitstrukturen den Einkoppelsteg berühren oder einteilig mit diesem ausgeführt sind, sodass sich im Einkoppelsteg ausbreitendes Licht in die Lichtleitstrukturen einkoppelbar ist.

Mit Hilfe der erfindungsgemäßen Lautsprecherbaugruppe lässt sich eine optisch besonders ansprechende Inszenierung der Blende umsetzen, was die Ästhetik der Lautsprecherbaugruppe verbessert und somit zu einem anmutenden Erscheinungsbild führt. Die Lichtquelle kann eine oder auch mehrere Leuchtmittel wie beispielsweise ein- oder mehrfarbige LEDs umfassen. Von der Lichtquelle abgegebenes Licht wird über den Einkoppelsteg an die einzelnen Lichtleitstrukturen der Lamellen verteilt, welche die jeweiligen Nachbarlamellen anstrahlen. Somit ist eine Beleuchtung der Blende der Lautsprecherbaugruppe möglich, ohne dass die Lichtquelle für einen Betrachter unmittelbar erkenntlich wird. Der in Betrachtungsrichtung hinter der Blende liegende Lautsprecher unterbricht dabei optisch die Flächenbeleuchtung nicht, was die Ästhetik weiter verbessert. Die erfindungsgemäße Lautsprecherbaugruppe lässt sich dabei so ausführen, dass von der Lamellenoberseite der Lamellen reflektiertes Licht hauptsächlich von der Lautsprecherbaugruppe weg gestreut und/oder reflektiert wird, sodass der hinter dem Lamellengitter liegende Lautsprecher für einen Betrachter nur schwer oder nicht erkenntlich ist. Je nach Vorlieben des Betrachters kann dies das ästhetische Erscheinungsbild der Lautsprecherbaugruppe noch weiter verbessern.

Auch ist es möglich, dass ausreichend Licht in Richtung des Lautsprechers geworfen wird, wodurch der Lautsprecher derart diffus angestrahlt wird, dass er durch einen Betrachter zumindest schwach erkenntlich ist. Zum Steuern des auf den Lautsprecher werfbaren Lichtanteils können Neigungswinkel der Lamellen, die Lamellenlänge sowie der Lamellenabstand zueinander passend ausgeführt sein.

Die Lautsprecherbaugruppe kann in eine übergeordnete Struktur, beispielsweise die A-Säule eines Fahrzeugs oder eine Fahrzeugtür, integriert sein, von der sich die Lautsprecherbaugruppe dank des Beleuchtungseffekts, insbesondere bei widrigen Lichtverhältnissen oder bei Dunkelheit, auf besonders ästhetische und anmutende Art und Weise abhebt. Die über die gesamte Fläche des Lamellengitters konstant ausgeführte Beleuchtung unterstützt diesen Effekt.

Die Lautsprecherbaugruppe kann dabei weitere Komponenten aufweisen wie ein zur Aufnahme des Lautsprechers eingerichtetes Gehäuse, welches mit der Blende abgedeckt wird. Dieses Gehäuse kann dann eine geeignete Passform der übergeordneten Struktur aufweisen und zum erleichternden Integrieren der Lautsprecherbaugruppe an der übergeordneten Struktur sowie zum Schutz vor Schmutz und Feuchte dienen.

Aufgrund der integralen Bauweise von Lichtleitstruktur und Reflektionsstruktur ist eine einfache und kostengünstige Herstellung der Blende und damit der Lautsprecherbaugruppe möglich. Die Lichtleitstruktur ist aus Sicht eines Betrachters durch die Reflektionsstruktur überdeckt, sodass die Lichtleitstruktur nicht direkt wahrnehmbar ist. Dies verbessert das optische Erscheinungsbild noch weiter.

Es können nur einige Lamellen des Lamellengitters oder auch bevorzugt alle Lamellen eine solche Lichtleitstruktur und Reflektionsstruktur aufweisen. Lamellen die nicht beleuchtet werden sollen, weisen oberhalb eine Nachbarlamelle auf, die über keine Lichtleitstruktur verfügt. Somit wird die entsprechende Lamelle auch nicht beleuchtet und erscheint dunkel. Hierdurch lassen sich gezielt Unterbrechungen im Lichtmuster einbringen, sollten die Designansprüche dies erfordern.

Der Einkoppelsteg kann sich dabei in einer Draufsicht auf die Lautsprecherbaugruppe vor oder hinter dem Lamellengitter befinden. Bevorzugt ist der Einkoppelsteg hinter den Lamellen, also zwischen Lamellengitter und Lautsprecher angeordnet, was das direkte Erkennen des Einkoppelstegs für einen Betrachter erschwert. Dies trägt weiter zum ästhetischen Erscheinungsbild der Lautsprecherbaugruppe bei. Der Einkoppelsteg kann dabei in die erste Richtung betrachtet an einer beliebigen Stelle am Lamellengitter angeordnet sein, beispielsweise mittig oder bevorzugt in einem Randbereich. Insbesondere bei einer Anordnung des Einkoppelstegs im Randbereich ist der Einkoppelsteg noch schwerer durch einen Betrachter erkennbar. Bei einer Anbringung innerhalb der Fläche des Lamellengitters lässt sich hingegen auch bei vergleichsweise großen Lamellengittern eine homogene Lichtverteilung gewährleisten. Übersteigt die Breite der Lamellen ein bestimmtes Maß, so könnte die Gefahr bestehen, dass vom Einkoppelsteg entfernte Lamellenbereiche zunehmend schwächer beleuchtet werden, was die homogene Beleuchtung gefährden würde. Ein solcher Effekt kann jedoch auch wünschenswert sein und je nach Designansprüchen angefordert werden.

Eine vorteilhafte Weiterbildung der Lautsprecherbaugruppe sieht vor, dass das Lamellengitter durch Zweikomponenten-Spritzguss gefertigt ist. Hierdurch wird die kostengünstige und simple Fertigung des Lamellengitters noch weiter unterstützt. Mit Hilfe von Spritzgießen lassen sich Serienteile mit hoher Zuverlässigkeit in hoher Stückzahl kostengünstig fertigen. Dabei werden zwei unterschiedliche Komponenten zur Ausbildung der Lichtleitstruktur und der Reflektionsstruktur verwendet. Besonders bevorzugt wird zur Ausbildung der Lichtleitstruktur ein für Licht vergleichsweise eine hohe Transparenz aufweisendes Material wie Polymethylmethacrylat und zur Ausbildung der Reflektionsstruktur ein opakes Material wie ein lichtundurchlässiger Kunststoff verwendet. Die Farbe des zur Reflektionsstruktur verwendeten Materials lässt sich gezielt an die Einsatzbedingungen der Lautsprecherbaugruppe einstellen. So können dunklere Farben wie Grau oder Schwarz aber auch hellere Farben wie Beige oder Weiß verwendet werden. Die Reflektionsstruktur kann auch zumindest im Bereich der Lamellenoberseite beschichtet und/oder strukturiert sein, um einen bestimmten Streuungsgrad oder Reflektionsgrad einzustellen.

Entsprechend einer weiteren vorteilhaften Ausgestaltung der Lautsprecherbaugruppe erstrecken sich für zumindest eine der Lamellen die Aussparung der Reflektionsstruktur und die jeweilige darin eingelassene Lichtleitstruktur über die vollständige Breite der respektiven Lamelle in die erste Richtung. Dies begünstigt die gleichmäßige Beleuchtung der Blende noch weiter. Insbesondere wird so die vollständige Fläche des Lamellengitters beleuchtet, was eine noch schärfere Kontur und damit Abgrenzung der beleuchteten Lautsprecherbaugruppe gegenüber einer übergeordneten Struktur erlaubt. Bevorzugt weisen alle Lamellen eine entsprechend durchgehende Aussparung mit entsprechend eingelassener Lichtleitstruktur auf. Es könnten jedoch auch einzelne Lamellen eine in die erste Richtung verkürzte Aussparung mit entsprechend passender Lichtleitstruktur aufweisen, um das visuelle Erscheinungsbild der Lautsprecherbaugruppe bei eingeschalteter Beleuchtung gezielt an Designansprüche anzupassen.

Eine weitere vorteilhafte Ausgestaltung der Lautsprecherbaugruppe sieht ferner vor, dass zumindest eine durch eine Nachbarlamelle mit Licht bescheinbare Lamellenoberseite mit einer lichtreflektierenden Beschichtung versehen ist oder die Reflektionsstruktur der jeweiligen Lamelle ein lichtreflektierendes Material umfasst. Mit "lichtreflektierend" ist in diesem Zusammenhang ein solches Material gemeint, mit dessen Hilfe das Erzeugen einer spiegelnden Oberfläche möglich ist. Beispielsweise können die Lamellenoberseiten verchromt sein oder eine solche Beschichtung aufweisen, dass sie als verchromt erscheinen. Hierdurch wird ein vergleichsweise hohes Reflektionsvermögen gewährleistet, wodurch besonders viel Licht in Richtung der Umgebung reflektiert wird. Entsprechend erscheinen die Lamellen des Lamellengitters besonders hell. Einzelne Lamellen können auch mit einem unterschiedlichen Material beschichtet sein oder aus einem abweichenden Material bestehen. Somit lässt sich der Reflektionsgrad der einzelnen Lamellen unterschiedlich ausgestalten. Dies kann dazu genutzt werden, dass optische Erscheinungsbild gezielt unterschiedlichen Anforderungen anzupassen. Zur Herstellung kann auch Mehrkomponentenspritzgießen verwendet werden.

Entsprechend einer weiteren vorteilhaften Ausgestaltung der Lautsprecherbaugruppe ist der Einkoppelsteg an seiner in einer Draufsicht auf das Lamellengitter betrachteten Seite mit einer lichtundurchlässigen Abdeckung versehen. Dabei kann der Einkoppelsteg vollständig oder auch nur teilweise mit der Abdeckung versehen sein. Eine vollständige Abdeckung hat den Effekt, dass der Einkoppelsteg für einen Betrachter nicht mehr erkennbar ist. Dabei kann die Lautsprecherbaugruppe auch derart an eine übergeordnete Struktur angeschlossen sein, dass Teile der übergeordneten Struktur den Einkoppelsteg verdecken. Die Abdeckung kann auch Aussparungen aufweisen, sodass sich im Einkoppelsteg ausbreitendes Licht durch diese Aussparungen in Richtung der Umgebung austreten kann. Dies kann beispielsweise dazu genutzt werden um selbstleuchtende Piktogramme oder Logos in die Lautsprecherbaugruppe einzubauen. Die lichtundurchlässige Abdeckung kann dabei unmittelbar oder mittelbar auf dem Einkoppelsteg aufliegen bzw. angeordnet sein. Befindet sich der Einkoppelsteg in Betrachtungsrichtung auf dem Lamellengitter, so kann die Abdeckung unmittelbar auf dem Einkoppelsteg aufliegen. Ist hingegen der Einkoppelsteg zwischen Lautsprecher und Lamellengitter angeordnet, so kann die lichtundurchlässige Abdeckung auch auf dem Lamellengitter aufliegen bzw. an diesem befestigt sein.

Der Einkoppelsteg kann auch derart ausgeführt sein, dass er an der dem Betrachter zugewandten Seite ein reduziertes Transmissionsvermögen aufweist, um zu bewirken, dass sich ein größerer Lichtanteil innerhalb des Einkoppelstegs ausbreitet und weniger bis gar kein Licht in Richtung des Betrachters "ausblutet". Hierzu kommen aus der Lichtleitertechnik bewährte Methoden in Frage.

Eine weitere vorteilhafte Ausgestaltung der Lautsprecherbaugruppe sieht ferner vor, dass das Verhältnis aus Lamellenlänge, Neigungswinkel der Lamellen und Abstand der Lamellen in die zweite Richtung zueinander derart ausgeführt ist, dass in einer Draufsicht auf das Lamellengitter die einzelnen Lamellen die Sicht auf den hinter dem Lamellengitter liegenden Bereich versperren. Bei einer direkten Draufsicht auf die Lautsprecherbaugruppe kann somit der Lautsprecher von einem Betrachter nicht erkannt werden. Dies begünstigt das ästhetische Erscheinungsbild der Lautsprecherbaugruppe für den Fall, dass die Lautsprecher nicht direkt erkenntlich sein sollen, noch weiter.

In einer weiteren bevorzugten Ausführungsform kann der Neigungswinkel der Lamellen auch frei einstellbar sein. Hierzu kommen bewährte Techniken in Frage, wie beispielsweise eine gerasterte oder stufenlose Verstellung. Eine solche Neigungswinkelverstellung ist beispielsweise zum Anpassen des Austrittswinkels eines Luftstroms eines Fahrzeuglüftungssystems bekannt. Hierdurch ist ein Betrachter dazu in der Lage das visuelle Erscheinungsbild der Lautsprecherbaugruppe während der Nutzung seinen eigenen Vorlieben anzupassen.

Das Verhältnis aus Lamellenlänge, Neigungswinkel und Abstand kann dabei auch derart variiert werden, dass in einem ersten Neigungswinkelbereich der hinter dem Lamellengitter liegende Lautsprecher nicht erkennbar ist und in einem zweiten Neigungswinkelbereich der Lautsprecher erkennbar ist. Mit zunehmender Neigungswinkeländerung kann dabei auch der Anteil des in Richtung des Lautsprechers reflektierten Lichts vergrößert werden, sodass der Lautsprecher zunehmend heller erscheint.

Entsprechend einer weiteren vorteilhaften Ausgestaltung der Lautsprecherbaugruppe ist zumindest ein Lautsprecher in einer Draufsicht auf das Lamellengitter außerhalb eines Flächenmittelpunkts des Lamellengitters angeordnet. Mit Hilfe der erfindungsgemäßen Lautsprecherbaugruppe lässt sich eine Beleuchtung der Blende umsetzen, bei der die Blende selbst mit Licht angestrahlt wird, und die somit diffus beleuchtet wird, der dahinterliegende Lautsprecher jedoch dunkel bleibt. Somit spielt die Position des Lautsprechers für das optische Erscheinungsbild der Lautsprecherbaugruppe keine Rolle mehr, sodass er an einer beliebigen Stelle, also auch außermittig, platziert werden kann. Somit können akustischen Anforderungen bei der Ausbildung der Lautsprecherbaugruppe Rechnung getragen werden, ohne das optische Erscheinungsbild nachteilig zu beeinflussen.

Bei einer alternativen Ausführung der Lautsprecherbaugruppe, bei der auch der Lautsprecher beleuchtet wird, ist ebenfalls auf vorteilhafte Art und Weise eine außermittige Platzierung des Lautsprechers möglich, da sich die Lautsprecherposition nicht auf die Lichtverteilung auf den Lamellen auswirkt, ganz im Gegensatz zu einer Lautsprecherhinterleuchtung.

Eine weitere vorteilhafte Ausgestaltung der Lautsprecherbaugruppe sieht ferner vor, dass die wenigstens eine Lichtquelle zur Erzeugung eines dynamischen Beleuchtungseffekts derart ansteuerbar ist, dass von der Lichtquelle abgegebenes Licht über der Zeit in seiner Helligkeit und/oder Farbe variierbar ist. Generell könnte die Lichtquelle statisches Licht abgeben. Bei einer Aktivierung der Lichtquelle könnte die Lichtquelle bzw. das eine oder mehreren Leuchtmittel der Lichtquelle somit Licht derselben Farbe bzw. derselben Helligkeit abstrahlen. Ein besonderer Effekt lässt sich jedoch erzeugen, wenn die Helligkeit und/oder die Farbe des oder der Leuchtmittel der Lichtquelle verändert werden. Beim Anlassen einer Fahrzeugzündung, Einschalten einer Fahrzeugbeleuchtung oder dem Starten des Abspielens von Musik könnten dann beispielsweise die Lichtquelle aktiviert werden, wobei Helligkeit und Farbe mit der Zeit verändert werden. Als Effekt lässt sich beispielsweise ein Aufglühen, Aufflackern oder Erwachen erzeugen. So wird mit fortschreitender Zeit beispielsweise die Helligkeit kontinuierlich erhöht oder pulsierend erhöht und reduziert. Dabei kann auch gleichzeitig die Farbe verändert werden.

Zur Ansteuerung der Lichtquelle kann ein separates Steuergerät verwendet werden. Dieses Steuergerät kann ebenfalls integraler Bestandteil der Lautsprecherbaugruppe sein oder auch extern hierzu ausgeführt sein. Entsprechend weist die Lautsprecherbaugruppe korrespondierende Signaleingänge zum Empfangen eines Ansteuerungssignals auf. Als "Ansteuerung" der Lichtquelle wird auch das simple Anlegen bzw. Variieren einer Betreiberspannung verstanden.

Ist die Lautsprecherbaugruppe in ein Fahrzeug integriert, so kann das zu erzeugende Lichtmuster in Übereinstimmung mit einer globalen Fahrzeugeinstellung übernommen werden, beispielsweise einer Ambiente-Beleuchtung. Das Ansteuern der Lichtquelle kann auch in Abhängigkeit weiterer Faktoren erfolgen, beispielsweise in Abhängigkeit der über die Lautsprecher abgegebenen Musik.

Bevorzugt ist der Einkoppelsteg in die zweite Richtung betrachtet in wenigstens zwei Segmente unterteilt, wobei jedem Segment eine individuelle und separat voneinander ansteuerbare Lichtquelle zugeordnet ist und die Segmentgrenze derart ausgeführt, dass ein Lichtübergang zwischen den Segmenten unterbunden wird. Die erfindungsgemäße Lautsprecherbaugruppe kann somit zur Erzeugung besonders abstrakter Lichtmuster genutzt werden, was das optische Erscheinungsbild und damit den anmutenden Wert noch weiter verbessert. So lassen sich beispielsweise in die zweite Richtung betrachtet nach und nach einzelne Lamellengruppen hintereinander beleuchten bzw. "einschalten". Auch können unterschiedliche Lamellen in abweichenden Farben und/oder mit abweichender Helligkeit beleuchtet werden. So lassen sich Helligkeits- und/oder Farbgradiente umsetzen. Auch hier ist eine statische oder dynamische Beleuchtung der einzelnen Lamellengruppen denkbar. Einem jeweiligen Segment können dabei auch mehrere Lichtquellen mit jeweils einer oder mehreren Leuchtmitteln zugeordnet sein.

Wie bereits erwähnt ist vorteilhaft eine im vorigen beschriebene Lautsprecherbaugruppe in ein Fahrzeug integriert. Bei dem Fahrzeug kann es sich um ein beliebiges Straßenfahrzeug wie einen Pkw, Lkw, Transportern, Bus oder dergleichen handeln, oder auch um ein Schienenfahrzeug, Wasserfahrzeug oder Flugzeug. Die Lautsprecherbaugruppe kann in einem Straßenfahrzeug beispielsweise im Bereich des Instrumentenbretts, der Hutablage, der A-Säule, B-Säule, C-Säule, im Fußraum, in einer Türverkleidung oder dergleichen installiert sein.

Weitere vorteilhafte Ausgestaltungen der erfindungsgemäßen Lautsprecherbaugruppe ergeben sich auch aus den Ausführungsbeispielen, welche nachfolgend unter Bezugnahme auf die Figuren näher beschrieben werden.

Dabei zeigen:
- Fig. 1: eine Draufsicht auf eine erfindungsgemäße Lautsprecherbaugruppe;
- Fig. 2: eine Draufsicht auf die Lamellenunterseite einer Lamelle eines als Blende fungierenden Lamellengitters;
- Fig. 3: eine Draufsicht auf eine erfindungsgemäße Lautsprecherbaugruppe mit einer auf einem Einkoppelsteg angebrachten Abdeckung;
- Fig. 4: eine Schnittansicht durch den in Fig. 1 eingezeichneten Schnitt durch das Lamellengitter der Lautsprecherbaugruppe; und
- Fig. 5: eine Draufsicht auf eine alternative Lautsprecherbaugruppe mit mehreren Einkoppelstegen.

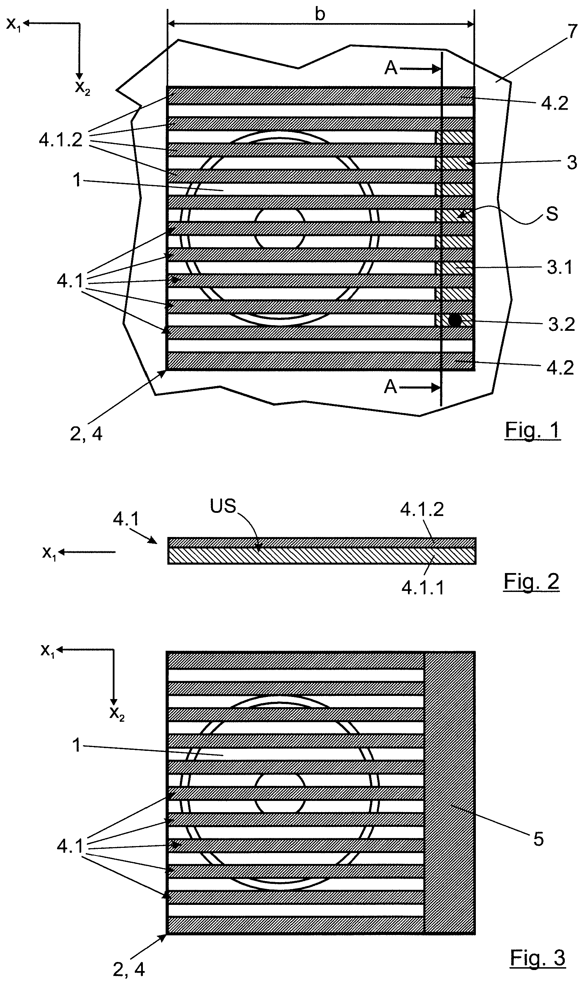

Figur 1 zeigt eine erfindungsgemäße Lautsprecherbaugruppe umfassend zumindest einen Lautsprecher 1, welcher in der gezeigten Draufsicht hinter einer Blende 2 angeordnet ist. Bei der Blende 2 handelt es sich um ein Lamellengitter 4 mit einer Vielzahl sich in einer ersten Richtung x₁ ausbreitenden Lamellen 4.1. Die Lamellen 4.1 versperren die Sicht auf den Lautsprecher 1 für einen Betrachter und dienen unter anderem als Berührschutz. Der Spalt zwischen den Lamellen 4.1 ist groß genug, sodass ausreichend vom Lautsprecher 1 abgegebener Schall durch die Blende 2 hindurchdringen kann. Zur Wahrung der Übersichtlichkeit sind nur einige gleichartige Merkmale mit demselben Bezugszeichen versehen.

Zum Erzielen eines wertanmutenden Eindrucks der Lautsprecherbaugruppe umfasst diese ferner eine Beleuchtungseinrichtung 3, um das Lamellengitter 4 bzw. die Blende 2 mit einem Beleuchtungseffekt auszustatten. Die erfindungsgemäße Lautsprecherbaugruppe sieht dabei eine Beleuchtung der einzelnen Lamellen 4.1 des Lamellengitters 4 vor, was im Gegensatz zu einem hinterleuchteten Lautsprecher, wie aus dem Stand der Technik bekannt, eine über die gesamte Betrachtungsfläche der Blende 2 eine konstante Ausleuchtung erlaubt, was zu einem besonders ästhetischen Erscheinungsbild der Lautsprecherbaugruppe beiträgt. Zum Beleuchten der Lamellen 4.1 verwendete Bauelemente sind dabei versteckt und somit für den Betrachter nicht sichtbar, was die Optik noch weiter verbessert.

Die erfindungsgemäße Lautsprecherbaugruppe kann weitere nicht näher dargestellte Bestandteile umfassen wie ein Gehäuse, Traggestell, Tragrahmen oder dergleichen, an dem weiteren Komponenten befestigt sind. Dies erlaubt eine einfache Montage der Lautsprecherbaugruppe an einer übergeordneten Struktur 7 wie beispielsweise einem Fahrzeugteil. Die Lautsprecherbaugruppe kann also in ein Fahrzeug integriert sein, beispielsweise in die A-Säule, eine Türverkleidung, ein Armaturenbrett oder dergleichen.

In den in den Figuren dargestellten Beispielen ist die Blende 2 bzw. das Lamellengitter 4 quadratisch ausgeführt. In einer Draufsicht kann die Blende 2 jedoch eine beliebige Form annehmen, beispielsweise eine kreisrunde oder ovale Form oder auch eine polygonale Form wie eine Dreiecksform, Trapezform, hexagonale Form oder dergleichen. Das Lamellengitter 4 kann geometrisch auch so ausgestaltet sein, dass es in einer Draufsicht sowohl Ecken als auch Rundungen aufweist. Die Lamellen 4.1 erstrecken sich dann gegebenenfalls in die erste Richtung x₁ betrachtet unterschiedlich weit, weisen also eine unterschiedliche Breite b auf. Die Lamellen 4.1 können an einigen oder allen Randseiten von einem Rahmen 4.2 umgeben sein.

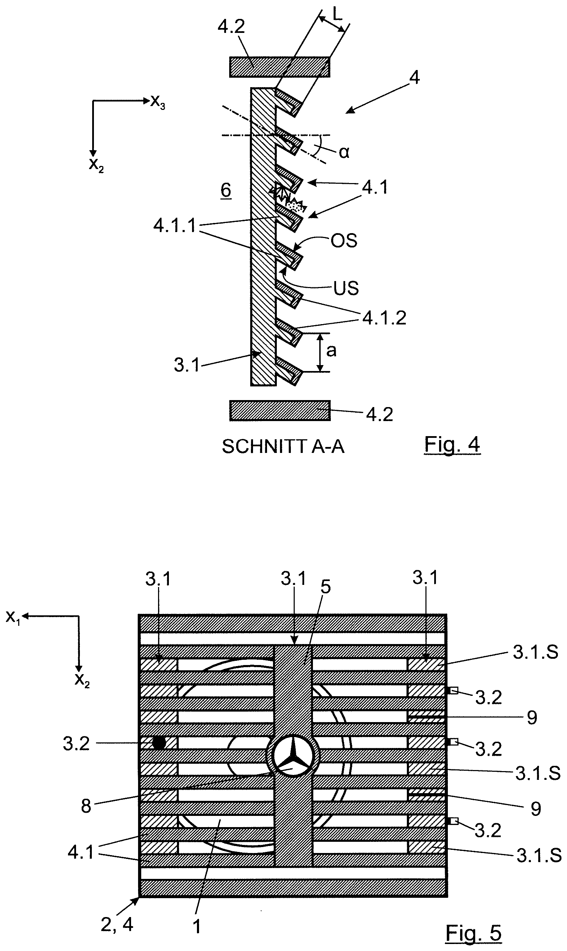

Einige bzw. bevorzugt sämtliche Lamellen 4.1 weisen, wie in den Figuren 2 und 4 dargestellt, einen integralen Aufbau aus einer Lichtleitstruktur 4.1.1 und einer Reflektionsstruktur 4.1.2 auf. Die Lichtleitstruktur 4.1.1 dient zum Beleuchten einer in Figur 4 gezeigten Lamellenoberseite OS und die Reflektionsstruktur 4.1.2 zum Streuen bzw. Reflektieren des entsprechend empfangenen Lichts. Die Lichtleitstruktur 4.1.1 bildet somit zusammen mit einem Einkoppelsteg 3.1 und zumindest einer Lichtquelle 3.2 die Beleuchtungseinrichtung 3 aus. Figur 2 verdeutlicht eine bevorzugte Ausführungsform, bei der sich die Lichtleitstruktur 4.1.1 über die vollständige Breite b einer Lamelle 4.1 erstreckt.

Bei der Lichtquelle 3.2 kann es sich um ein Leuchtmittel oder eine Anordnung aus mehreren Leuchtmittelen wie beispielsweise einfarbige oder mehrfarbige LEDs handeln. Von der Lichtquelle 3.2 abgegebenes Licht wird in den Einkoppelsteg 3.1 eingekoppelt und breitet sich in diesem aus. Die Anordnung der Lichtquelle 3.2 gegenüber dem Einkoppelsteg ist auf bekannte Art und Weise möglich und kann an beliebiger geeigneter Stelle erfolgen.

Aus dem Einkoppelsteg 3.1 breitet sich das Licht dann in die Lichtleitstrukturen 4.1.1 der einzelnen Lamellen 4.1 aus und tritt entsprechend an einer Lamellenunterseite US, ebenfalls in Figur 4 gezeigt, aus. Der Einkoppelsteg 3.1 und die Lichtleitstrukturen 4.1.1 können einteilig oder mehrteilig ausgeführt sein. Besonders bevorzugt handelt es sich um eine einteilige Ausführung, die durch Zweikomponentenspritzgießen hergestellt wird. Bei beweglichen Lamellen 4.1 kommt eine mehrteilige Ausführung in Frage.

Die Lichtleitstrukturen 4.1.1 und der Einkoppelsteg 3.1 umfassen somit ein für das von der Lichtquelle 3.2 abgegebene Licht transparentes Material. Die lichtführenden Bauteile, also die Lichtleitstrukturen 4.1.1 und der Einkoppelsteg 3.1, können derart ausgeführt sein, dass das sich innerhalb der Strukturen ausbreitende Licht an den Innenwänden vergleichsweise stark reflektiert wird und nur an der vorgesehenen Austrittsöffnung, nämlich an der Lamellenunterseite US, durch Vorsehen eines geringen internen Reflektionsgrads und entsprechend hohen Transmissionsgrads in diesem Bereich leicht austreten kann. Dies sorgt für eine effiziente Lichtverteilung.

Die Lichtquelle 3.2 kann wie bereits erwähnt an einer beliebigen Stelle zum Einkoppeln in den Einkoppelsteg 3.1 vorgesehen sein, beispielsweise wie in Figur 1 dargestellt in eine zur ersten Richtung x₁ orthogonale zweite Richtung x₂ betrachtet an einem Ende des Einkoppelstegs 3.1. Die Lichtquelle 3.2 könnte sich jedoch in die zweite Richtung x₂ betrachtet auch weiter oben, beispielsweise mittig oder am oberen Rand des Einkoppelstegs 3.1 befinden. Es könnten auch mehrere über die Ausdehnung des Einkoppelstegs 3.1 verteilt angeordnete Lichtquellen 3.2 (nicht dargestellt) vorgesehen sein, beispielsweise eine Lichtquelle 3.2 für jede beleuchtete Lamelle 4.1.

Da der Lautsprecher 1 keinen Einfluss auf die Lichtverteilung entlang der Blende 2 hat, ist eine gleichmäßige Ausleuchtung auch bei einer außermittigen Positionierung des Lautsprechers 1 in einer Draufsicht auf die Blende 2 möglich.

Figur 3 zeigt eine alternative Ausführung der Lautsprecherbaugruppe, bei der der Einkoppelsteg 3.1 an einer dem Betrachter zugewandten Seite S (siehe Figur 1) mit einer Abdeckung 5 versehen ist. Dies begünstigt das anmutende optische Erscheinungsbild der Lautsprecherbaugruppe noch weiter, da somit zuverlässig verhindert wird, dass ungewollt aus dem Einkoppelsteg 3.1 austretendes Licht durch einen Betrachter wahrgenommen wird. Anstelle einer Abdeckung 5 kann auch eine opake Beschichtung an entsprechender Stelle auf den Einkoppelsteg 3.1 aufgebracht werden. Auch kann die Lautsprecherbaugruppe derart in die übergeordnete Struktur 7 bzw. ein Gehäuse eingelassen sein, dass dieses Gehäuse bzw. die Teile der übergeordneten Struktur 7 den Einkoppelsteg 3.1 zumindest abschnittsweise verdecken.

Die Abdeckung 5 bzw. Beschichtung kann auch gezielt Aussparungen aufweisen, um bestimmte Lichtmuster für den Betrachter erscheinen zu lassen, wie ein Piktogramm oder ein in Figur 5 gezeigtes Logo 8. Liegt der Einkoppelsteg 3.1 zwischen Lautsprecher 1 und Lamellengitter 4, so können auch einzelne Lamellen 4.1 korrespondierende Aussparungen zum Hindurchlassen des aus dem Einkoppelsteg 3.1 austretenden Lichts aufweisen, um eine Realisierung des Logos 8 zu ermöglichen. Die Abdeckung 5 kann auch einteilig mit den Lamellen 4.1 ausgeführt sein, also als eine Art "Verbindungssteg".

Figur 4 zeigt die Schnittansicht des in Figur 1 eingezeichneten Schnitts A. Figur 4 verdeutlicht den integralen Aufbau der Lamellen 4.1 aus Lichtleitstrukturen 4.1.1 und Reflektionsstrukturen 4.1.2. Die Lamellen 4.1 weisen einen Neigungswinkel α und eine Länge L auf. Zudem sind die einzelnen Lamellen 4.1 in die zweite Richtung x₂ betrachtet mit einem Abstand a zueinander entfernt angeordnet. Die einzelnen Parameter für den Abstand a, den Neigungswinkel α und die Länge L können beliebig an Kundenanforderungen angepasst werden. So können die Lamellen 4.1 so ausgeführt sein, dass eine Durchsicht durch das Lamellengitter 4 auf einen dahinterliegenden Bereich 6 für einen Betrachter versperrt wird oder freigelassen wird. Insbesondere über den Neigungswinkel α lässt sich der Anteil in Richtung des Bereichs 6 gestreuten bzw. reflektierten Lichts steuern, sodass gezielt der Ausleuchtungsgrad des hinter der Blende 2 liegenden Lautsprechers 1 gesteuert werden kann. Es kann erwünscht sein, dass der Lautsprecher 1 trotz eingeschalteter Beleuchtung nicht erkennbar ist. Es kann jedoch auch erwünscht sein, dass dieser besonders hell erleuchtet wird und damit klar erkennbar ist. Eine mögliche Ausführung sieht dabei vor, dass der Neigungswinkel α beispielsweise über ein Rädchen, Klapphebel oder dergleichen und eine entsprechende Mechanik durch einen Nutzer frei und stufenlos eingestellt werden kann.

Figur 4 verdeutlicht auch, angedeutet durch Pfeile, die Ausbreitungsrichtung des aus den Lichtleitstrukturen 4.1.1 ausgekoppelten Lichts. Je nach Oberflächenbeschaffenheit der Reflektionsstruktur 4.1.2 wird das Licht gestreut und/oder reflektiert. Das Maß an Streuung bzw. Reflektion lässt sich auf bekannte Art und Weise einstellen, wie durch das Ändern der Oberflächenfarbe und/oder der Oberflächenstruktur der Reflektionsstrukturen 4.1.2 zumindest an der Lamellenoberseite OS. Auch kann ein reflektierendes Material wie eine Chromschicht oder eine den Anschein einer Chromschicht hervorrufenden Beschichtung auf die Lamellenoberseite OS aufgebracht sein.

Der Einkoppelsteg 3.1 kann in eine zur ersten Richtung x₁ und zweiten Richtung x₂ orthogonale dritte Richtung x₃ auch versetzt sein, also bei einer Ansicht von Figur 4 weiter nach links oder rechts verschoben sein. Beispielsweise kann der Einkoppelsteg 3.1 auch mit den Lamellen 4.1 im Wesentlichen in einer Ebene liegen. Hierzu kann dann der Einkoppelsteg 3.1 in die erste Richtung x1 betrachtet außerhalb der Umrandung des von der Blende 2 eingenommenen Flächenbereichs liegen.

Selbstverständlich könnte das gesamte Lamellengitter 4 in der Ebene liegend auch gedreht sein, sodass die Lamellen 4.1 in Figur 4 nicht nach unten, sondern nach oben zeigen würden, oder in Richtung auf einen Betrachter zu, bzw. von diesem weg.

Figur 5 zeigt eine weitere alternative Ausführung der Lautsprecherbaugruppe, bei der mehrere Einkoppelstege 3.1 vorgesehen sind. In Figur 5 sind mehrere alternative Ausführungsformen in Kombination dargestellt. Bevorzugt ist ein Einkoppelsteg 3.1 an einem seitlichen Rand des Lamellengitters 4 in die erste Richtung x₁ betrachtet angeordnet, wie in Figur 1 dargestellt. Es können jedoch auch mehrere Einkoppelstege 3.1 vorgesehen sein, beispielsweise zwei, drei oder noch mehr Einkoppelstege 3.1. Beispielsweise können drei Einkoppelstege 3.1 vorhanden sein, wie in Figur 5 dargestellt, wobei zwei Einkoppelstege 3.1 an den beiden seitlichen Rändern in die erste Richtung x₁ betrachtet vorhanden sind und ein Einkoppelsteg 3.1 mittig vorgesehen ist. Insbesondere wenn die Lamellen 4.1 eine vergleichsweise hohe Breite b aufweisen kann somit eine gleichmäßige Lichtverteilung und damit Ausleuchtung der Blende 2 gewährleistet werden.

Figur 5 zeigt eine weitere mögliche Ausführungsform eines Einkoppelstegs 3.1. Diese alternative Ausführung ist an dem in Figur 5 rechts dargestellten Einkoppelsteg 3.1 veranschaulicht. Dieser Einkoppelsteg 3.1 ist in mehrere Segmente 3.1.S unterteilt, wobei jedem dieser Segmente 3.1.S eine individuelle Lichtquelle 3.2 zugeordnet ist. Gezeigt ist eine seitliche Anordnung der Lichtquellen 3.2 bezüglich des Einkoppelstegs 3.1. Eine Lichtausbreitung über die Segmente 3.1.S hinweg wird durch das Einbringen einer entsprechenden Sperrschicht 9 unterbunden. Bei dieser Sperrschicht 9 handelt es sich um eine vergleichsweise dünne Schicht aus einem lichtundurchlässigen Material. Die einzelnen Lichtquellen 3.2 lassen sich individuell voneinander ansteuern. Dies ermöglicht eine dynamische Beleuchtung, beispielsweise durch zeitlich wechselnde Helligkeit und/oder Farbeffekte. Durch das Trennen des Einkoppelstegs 3.1 in die Segmente 3.1.S lassen sich die in die zweite Richtung x₂ hintereinander angeordneten Lamellen 4.1 zu unterschiedlichen Zeitpunkten beleuchten. Dies erlaubt die Umsetzung von Animationen. So können die Lamellen 4.1 nach und nach beleuchtet werden und/oder Farbverläufe bzw. Helligkeitsverläufe in die zweite Richtung x₂ realisiert werden. Analog können auch die weiteren Einkoppelstege 3.1 in Segmente 3.1.S unterteilt sein, was auch das Vorsehen von Farb- bzw. Helligkeitsverläufe in die erste Richtung x₁ erlaubt.

Mit Hilfe der erfindungsgemäßen Lautsprecherbaugruppe lässt sich das Lamellengitter 4 optisch besonders ästhetisch von der übergeordneten Struktur 7 abgrenzen. Dies trägt zu einem besonders ansprechenden visuellen Erscheinungsbild dar. Eine oder mehrere solcher Lautsprecherbaugruppen können in ein Fahrzeug integriert sein, was zur Steigerung des Nutzererlebnisses bei einer Fahrt mit dem Fahrzeug für die Fahrzeuginsassen führt. Aufgrund der beschriebenen Konstruktionsweise lässt sich die Lautsprecherbaugruppe einfach und kostengünstig fertigen. Da die lichtleitenden Elemente in die Blende 2 bzw. das Lamellengitter 4 integriert sind, kann auf das Vorsehen weiterer zusätzlicher zum Beleuchten erforderliche Bauteile verzichtet werden. Dies vereinfacht den Aufbau noch weiter. Der vorhandene Bauraum lässt sich entsprechend effizient ausnutzen. Zudem wird der Beleuchtungseffekt durch den in Betrachtungsrichtung hinter der Blende 2 liegende Lautsprecher 1 nicht gestört.

## Patentansprüche

1. Lautsprecherbaugruppe mit Beleuchtungseffekt, umfassend zumindest einen Lautsprecher (1), eine den zumindest einen Lautsprecher (1) in Richtung einer Schallabstrahlungsrichtung abdeckende Blende (2) und eine Beleuchtungseinrichtung (3) zum Bescheinen der Blende (2) mit Licht, wobei
- die Blende (2) von einem Lamellengitter (4) ausgebildet ist, umfassend wenigstens zwei im Wesentlichen in eine erste Richtung (x₁) verlaufende Lamellen (4.1); und wobei
- Lichtleitstrukturen (4.1.1) zusammen mit einem Einkoppelsteg (3.1) und wenigstens einer Lichtquelle (3.2) die Beleuchtungseinrichtung (3) ausbilden, wobei mittels der wenigstens einen Lichtquelle (3.2) Licht in den Einkoppelsteg (3.1) einkoppelbar ist, der Einkoppelsteg (3.1) in eine zur ersten Richtung (x₁) orthogonale zweite Richtung (x₂) verläuft und die Lichtleitstrukturen (4.1.1) den Einkoppelsteg (3.1) berühren oder einteilig mit diesem ausgeführt sind, sodass sich im Einkoppelsteg (3.1) ausbreitendes Licht in die Lichtleitstrukturen (4.1.1) einkoppelbar ist,
**dadurch gekennzeichnet, dass**
- zumindest einige der Lamellen (4.1) jeweils von einer der Lichtleitstrukturen (4.1.1) und einer damit integral ausgeführten Reflektionsstruktur (4.1.2) ausgebildet sind, wobei die Reflektionsstruktur (4.1.2) an einer Lamellenunterseite (US) eine in die erste Richtung (x₁) verlaufende Aussparung aufweist, in die die Lichtleitstruktur (4.1.1) derart eingelassen ist, dass aus der Lichtleitstruktur (4.1.1) auskoppelbares Licht auf eine Lamellenoberseite (OS) der darunterliegenden Nachbarlamelle werfbar ist.

2. Lautsprecherbaugruppe nach Anspruch 1,
**dadurch gekennzeichnet, dass**
das Lamellengitter (4) durch Zweikomponenten-Spritzguss gefertigt ist.

3. Lautsprecherbaugruppe nach Anspruch 1 oder 2,
**dadurch gekennzeichnet, dass**
sich für zumindest eine der Lamellen (4.1) die Aussparung der Reflektionsstruktur (4.1.2) und die jeweilige darin eingelassene Lichtleitstruktur (4.1.1) über die vollständige Breite (b) der respektiven Lamelle (4.1) in die erste Richtung (x₁) erstrecken.

4. Lautsprecherbaugruppe nach einem der Ansprüche 1 bis 3,
**dadurch gekennzeichnet, dass**
zumindest eine durch eine Nachbarlamelle mit Licht bescheinbare Lamellenoberseite (OS) mit einer lichtreflektierenden Beschichtung versehen ist oder die Reflektionsstruktur (4.1.2) der jeweiligen Lamelle (4.1) ein lichtreflektierendes Material umfasst.

5. Lautsprecherbaugruppe nach einem der Ansprüche 1 bis 4,
**dadurch gekennzeichnet, dass**
der Einkoppelsteg (3.1) an seiner in einer Draufsicht auf das Lamellengitter (4) betrachteten Seite (S) mit einer lichtundurchlässigen Abdeckung (5) versehen ist.

6. Lautsprecherbaugruppe nach einem der Ansprüche 1 bis 5,
**dadurch gekennzeichnet, dass**
das Verhältnis aus Lamellenlänge (L), Neigungswinkel (α) der Lamellen (4.1) und Abstand (a) der Lamellen (4.1) in die zweite Richtung (x₂) zueinander derart ausgeführt ist, dass in einer Draufsicht auf das Lamellengitter (4) die einzelnen Lamellen (4.1) die Sicht auf den hinter dem Lamellengitter (4) liegenden Bereich (6) versperren.

7. Lautsprecherbaugruppe nach einem der Ansprüche 1 bis 6,
**dadurch gekennzeichnet, dass**
zumindest ein Lautsprecher (1) in einer Draufsicht auf das Lamellengitter (4) außerhalb eines Flächenmittelpunkts des Lamellengitters (4) angeordnet ist.

8. Lautsprecherbaugruppe nach einem der Ansprüche 1 bis 7,
**dadurch gekennzeichnet, dass**
die wenigstens eine Lichtquelle (3.2) zur Erzeugung eines dynamischen Beleuchtungseffekts derart ansteuerbar ist, dass von der Lichtquelle (3.2) abgegebenes Licht über der Zeit in seiner Helligkeit und/oder Farbe variierbar ist.

9. Lautsprecherbaugruppe nach einem der Ansprüche 1 bis 8,
**dadurch gekennzeichnet, dass**
der Einkoppelsteg (3.1) in die zweite Richtung (x₂) betrachtet in wenigstens zwei Segmente (3.1.S) unterteilt ist, wobei jedem Segment (3.1.S) eine individuelle und separat voneinander ansteuerbare Lichtquelle (3.2) zugeordnet ist und die Segmentgrenze derart ausgeführt ist, dass ein Lichtübergang zwischen den Segmenten (3.1.S) unterbunden wird.

10. Fahrzeug,
**gekennzeichnet durch**
wenigstens eine Lautsprecherbaugruppe nach einem der Ansprüche 1 bis 9.

## Claims

1. Loudspeaker assembly with lighting effect, comprising at least one loudspeaker (1), a screen (2) covering the at least one loudspeaker (1) in the direction of a sound radiation direction and a lighting device (3) for illuminating the screen (2) with light,
- the screen (2) being formed by a lamellar grid (4), comprising at least two lamellae (4.1) running substantially in a first direction (x₁); and
- light guide structures (4.1.1) together with a coupling bridge (3.1) and at least one light source (3.2) forming the lighting device (3), light being able to be coupled into the coupling bridge (3.1) by means of the at least one light source (3.2), the coupling bridge (3.1) running in a second direction (x₂) orthogonal to the first direction (x₁) and the light guide structures (4.1.1) touching the coupling bridge (3.1) or being integrally formed with it, so that light propagating in the coupling bridge (3.1) can be coupled into the light guide structures (4.1.1),
**characterized in that**
- at least some of the lamellae (4.1) are formed in each case by one of the light guide structures (4.1.1) and a reflection structure (4.1.2) integral therewith, the reflection structure (4.1.2) having a recess running in the first direction (x₁) on a lamella underside (US), in which recess the light guide structure (4.1.1) is embedded in such a way that light that can be coupled out of the light guide structure (4.1.1) can be projected onto a lamella upper side (OS) of the adjacent lamella below.

2. Loudspeaker assembly according to claim 1,
**characterized in that**
the lamellar grid (4) is manufactured by two-component injection molding.

3. Loudspeaker assembly according to claim 1 or 2,
**characterized in that**
for at least one of the lamellae (4.1) the recess of the reflection structure (4.1.2) and the particular light guide structure (4.1.1) embedded therein extend over the entire width (b) of the particular lamella (4.1) in the first direction (x₁).

4. Loudspeaker assembly according to any of claims 1 to 3,
**characterized in that**
at least one lamella upper side (OS) that can be illuminated with light by an adjacent lamella is provided with a light-reflecting coating or the reflection structure (4.1.2) of the particular lamella (4.1) comprises a light-reflecting material.

5. Loudspeaker assembly according to any of claims 1 to 4,
**characterized in that**
the coupling bridge (3.1) is provided with an opaque cover (5) on its side (S) as viewed in a top view of the lamellar grid (4).

6. Loudspeaker assembly according to any of claims 1 to 5,
**characterized in that**
the ratio of lamella length (L), inclination angle (α) of the lamellae (4.1) and distance (a) between the lamellae (4.1) in the second direction (x₂) is designed in such a way that in a top view of the lamellar grid (4) the individual lamellae (4.1) obstruct the view of the region (6) behind the lamellar grid (4).

7. Loudspeaker assembly according to any of claims 1 to 6,
**characterized in that**
at least one loudspeaker (1) is arranged outside a surface center of the lamellar grid (4) in a top view of the lamellar grid (4).

8. Loudspeaker assembly according to any of claims 1 to 7,
**characterized in that**
the at least one light source (3.2) can be controlled to generate a dynamic lighting effect in such a way that light emitted by the light source (3.2) can be varied in its brightness and/or color over time.

9. Loudspeaker assembly according to any of claims 1 to 8,
**characterized in that**
the coupling bridge (3.1), when viewed in the second direction (x₂), is divided into at least two segments (3.1.S), each segment (3.1.S) being assigned an individual and separately controllable light source (3.2) and the segment boundary being designed in such a way that light transition between the segments (3.1.S) is prevented.

10. Vehicle,
**characterized by**
at least one loudspeaker assembly according to any of claims 1 to 9.

## Revendications

1. Ensemble à haut-parleur à effet d'éclairage, comprenant au moins un haut-parleur (1), un cache (2) recouvrant l'au moins un haut-parleur (1) vers une direction de rayonnement sonore, et un dispositif d'éclairage (3) pour l'éclairage du cache (2) avec de la lumière, dans lequel
- le cache (2) est formé par une grille à lamelles (4) comprenant au moins deux lamelles (4,1) s'étendant sensiblement dans une première direction (x₁) ; et dans lequel
- des structures de guidage de lumière (4.1.1) forment, conjointement avec une barrette d'injection (3,1) et au moins une source de lumière (3,2), le dispositif d'éclairage (3), dans lequel de la lumière peut être injectée, au moyen de l'au moins une source de lumière (3,2), dans la barrette d'injection (3,1), la barrette d'injection (3,1) s'étendant dans une seconde direction (x₂) orthogonale à la première direction (x₁) et les structures de guidage de lumière (4.1.1) étant en contact avec la barrette d'injection (3,1) ou réalisées d'un seul tenant avec celle-ci de sorte que de la lumière se propageant dans la barrette d'injection (3,1) peut être injectée dans les structures de guidage de lumière (4.1.1),
**caractérisé en ce que**
- au moins certaines des lamelles (4,1) sont respectivement formées par l'une des structures de guidage de lumière (4.1.1) et par une structure réfléchissante (4.1.2) réalisée d'un seul tenant avec celle-ci, dans lequel la structure réfléchissante (4.1.2) présente, sur un côté inférieur de lamelle (US), un évidement s'étendant dans la première direction (x₁) dans lequel la structure de guidage de lumière (4.1.1) est encastrée de telle sorte que de la lumière pouvant être extraite de la structure de guidage de lumière (4.1.1) peut être jetée sur un côté supérieur de lamelle (OS) de la lamelle voisine située en dessous.

2. Ensemble à haut-parleur selon la revendication 1,
**caractérisé en ce que**
la grille à lamelles (4) est fabriquée par moulage par injection à deux composants.

3. Ensemble à haut-parleur selon la revendication 1 ou 2,
**caractérisé en ce que**
pour au moins l'une des lamelles (4,1), l'évidement de la structure réfléchissante (4.1.2) et la structure de guidage de lumière (4.1.1) respective qui y est encastrée s'étendent, dans la première direction (x₁), sur toute la largeur (b) de la lamelle (4,1) respective.

4. Ensemble à haut-parleur selon l'une des revendications 1 à 3,
**caractérisé en ce que**
au moins un côté supérieur de lamelle (OS) pouvant être éclairé avec de la lumière par une lamelle voisine est pourvu d'un revêtement réfléchissant la lumière, ou la structure réfléchissante (4.1.2) de la lamelle (4,1) respective comprend un matériau réfléchissant la lumière.

5. Ensemble à haut-parleur selon l'une des revendications 1 à 4,
**caractérisé en ce que**
la barrette d'injection (3,1) est pourvue, sur son côté (S) vu en vue de dessus de la grille à lamelles (4), d'un élément de recouvrement (5) opaque.

6. Ensemble à haut-parleur selon l'une des revendications 1 à 5,
**caractérisé en ce que**
le rapport entre la longueur des lamelles (L), l'angle d'inclinaison (α) des lamelles (4,1) et l'espacement (a) des lamelles (4,1) entre elles dans la seconde direction (x₂) est réalisé de telle sorte que, dans une vue de dessus de la grille à lamelles (4), les lamelles (4,1) individuelles masquent la vue sur la zone (6) située derrière la grille à lamelles (4).

7. Ensemble à haut-parleur selon l'une des revendications 1 à 6,
**caractérisé en ce que**
au moins un haut-parleur (1) est disposé, en vue de dessus de la grille à lamelles (4), à l'extérieur du centre de surface de la grille à lamelles (4).

8. Ensemble à haut-parleur selon l'une des revendications 1 à 7,
**caractérisé en ce que**
l'au moins une source de lumière (3,2) peut être commandée pour produire un effet d'éclairage dynamique de telle sorte que, au fil du temps, la lumière délivrée en sortie par la source de lumière (3,2) peut varier en termes de luminance et/ou de couleur.

9. Ensemble à haut-parleur selon l'une des revendications 1 à 8,
**caractérisé en ce que**
la barrette d'injection (3,1), vue dans la seconde direction (x₂), est divisée en au moins deux segments (3.1.S), dans lequel chaque segment (3.1.S) est associé à une source de lumière (3,2) individuelle et pouvant être commandée séparément par rapport à l'autre, et la délimitation entre segments est réalisée de telle sorte qu'une transition de lumière entre les segments (3.1.S) est empêchée.

10. Véhicule,
**caractérisé par**
au moins un ensemble à haut-parleur selon l'une des revendications 1 à 9.
